# EUROPEAN PATENT APPLICATION

(11) **EP 3 683 265 A1**
(43) Date of publication of application: **22.07.2020**
(21) Application number: 18857290.3
(22) Date of filing: 14.09.2018
(51) Int. Cl.: C08L 23/00, C08J 3/03, C08K 5/098, D06M 13/188, D06M 15/263, D06M 101/20

(54) **AQUEOUS ETHYLENE RESIN DISPERSION AND AQUEOUS HEAT SEALING MATERIAL**

(30) Priority: 15.09.2017 JP 2017178086
(71) Applicant: Sumitomo Seika Chemicals Co., Ltd., Kako-gun, Hyogo 675-0145 (JP)
(72) Inventor: MIZUKAWA, Junichi, Yachiyo-shi Chiba 276-0022 (JP); OKAMOTO, Masafumi, Himeji-shi Hyogo 672-8076 (JP); SUGIHARA, Norihiro, Osaka-shi Osaka 541-0041 (JP); MIYAZAKI, Hiromasa, Himeji-shi Hyogo 672-8076 (JP)
(74) Representative: Vossius & Partner Patentanwälte Rechtsanwälte mbB
(86) International application number: PCT/JP2018/034236
(87) International publication number: WO 2019/054496

(57) **Abstract**

Provided is an ethylene-based resin aqueous dispersion that can form a film having excellent airtightness and adhesiveness when applied to a substrate, such as a fiber substrate.

The ethylene-based resin aqueous dispersion of the present invention comprises a copolymer containing an ethylene unit and an α, β-unsaturated carboxylic acid salt unit, a fatty acid salt, and an aqueous medium, wherein the copolymer and the fatty acid salt are dispersed in the aqueous medium.

## Description

### Technical Field

The present invention relates to an ethylene-based resin aqueous dispersion, and an aqueous-based heat-sealing material.

### Background Art

Ethylene-based thermoplastic resins such as ethylene/α,β-unsaturated carboxylic acid copolymers are known to be able to form films having excellent heat-adhesion properties. Having such a characteristic, ethylene-based thermoplastic resins are used in a wide variety of applications, such as coating agents, heat-sealing agents, delayed tack agents, in-mold labeling, part-coating agents, fiber-treating agents, and various binders.

Ethylene-based thermoplastic resins may be used in a solid state, or in a state dissolved or dispersed in a solvent or water. Since forming a thin film from an ethylene-based thermoplastic resin in a solid state is difficult, ethylene-based thermoplastic resins are often used in the latter state (e.g., an aqueous dispersion). Particularly from the viewpoint of resource-saving, safety, and environmental problems, the use of an aqueous dispersion-type ethylene-based thermoplastic resin (ethylene-based resin aqueous dispersion) that does not require the use of a large amount of an organic solvent has recently been promoted.

For example, as an ethylene-based resin aqueous dispersion, an aqueous dispersion obtained by neutralizing a copolymer having an ethylene unit and an acrylic acid unit with an alkali, and dispersing the neutralized copolymer in an aqueous dispersion medium, is known (PTL 1).

### Citation List

### Patent Literature

PTL 1: JP1975-135141A

### Summary of Invention

### Technical Problem

However, when a small amount of a conventional ethylene-based resin aqueous dispersion is applied to a fiber substrate, such as a nonwoven fabric, for the purpose of imparting airtightness and adhesiveness thereto, a gap is likely to occur between the fiber and the coating film. When the fiber substrate is, for example, used as a packaging material, this gap reduces the airtightness of the packaging material.

The present invention was made in light of the above. An object of the present invention is to provide an ethylene-based resin aqueous dispersion capable of forming a film having excellent airtightness and adhesiveness when applied to a substrate, such as a fiber substrate; and an aqueous-based heat-sealing material.

### Solution to Problem

As a result of extensive research to achieve the above object, the present inventors found that the above object can be achieved by dispersing a fatty acid salt and a copolymer having a specific structure in an aqueous medium. The present invention was thus accomplished.

Specifically, the present invention includes, for example, the inventions described in the following items.
Item 1. An ethylene-based resin aqueous dispersion comprising: a copolymer containing an ethylene unit and an α, β-unsaturated carboxylic acid salt unit, a fatty acid salt, and an aqueous medium, wherein the copolymer and the fatty acid salt are dispersed in the aqueous medium.
Item 2. The ethylene-based resin aqueous dispersion according to Item 1, wherein the α, β-unsaturated carboxylic acid salt in the copolymer is a salt of acrylic acid or a salt of methacrylic acid.
Item 3. The ethylene-based resin aqueous dispersion according to Item 1 or 2, wherein the contact angle against a polyethylene nonwoven fabric is 75 to 90°.
Item 4. The ethylene-based resin aqueous dispersion according to any one of Items 1 to 3, wherein the fatty acid salt is contained in an amount of 1 to 30 parts by mass per 100 parts by mass of the copolymer.
Item 5. An aqueous-based heat-sealing material comprising the ethylene-based resin aqueous dispersion according to any one of Items 1 to 4.

### Advantageous Effects of Invention

The ethylene-based resin aqueous dispersion of the present invention can form a film having excellent airtightness and adhesiveness when applied to a substrate, such as a fiber substrate.

### Description of Embodiments

The embodiments of the present invention are described in detail below. In this specification, the expressions "contain" and "comprise" include the concepts of "contain," "comprise," "consist essentially of," and "consist of."

The ethylene-based resin aqueous dispersion of the present invention comprises a copolymer containing an ethylene unit and an α, β-unsaturated carboxylic acid salt unit, a fatty acid salt, and an aqueous medium. The copolymer and the fatty acid salt are present in the state of a dispersion in the aqueous medium. In this specification, a copolymer containing an ethylene unit and an α,β-unsaturated carboxylic acid salt unit is simply referred to as a "copolymer."

As the aqueous medium, water is preferred; and various types of water, such as tap water, industrial water, ion exchange water, deionized water, and pure water, can be used. The aqueous medium is particularly preferably deionized water or pure water. The aqueous medium may comprise a pH adjuster, viscosity adjuster, antifungal agent, or the like, as long as the effect of the present invention is not impaired.

As long as the effect of the present invention is not impaired, the aqueous medium can contain other organic solvents, for example, an alcohol compound such as ethanol. The aqueous medium is preferably composed of water alone.

The copolymer is a polymer compound containing an ethylene unit and an α,β-unsaturated carboxylic acid salt unit as recurring units. For the sake of confirmation, the ethylene unit is a repeating constituent unit that is formed when an ethylene monomer is polymerized, and does not indicate a monomer itself. Similarly, the α,β-unsaturated carboxylic acid salt unit is a repeating constituent unit formed when an α,β-unsaturated carboxylic acid monomer is polymerized (the carboxylic acid moiety can be neutralized to form a salt before or after polymerization), and does not indicate a monomer itself.

The α, β-unsaturated carboxylic acid salt unit has a structure in which the α,β-unsaturated carboxylic acid unit is neutralized with, for example, a base.

Examples of the α, β-unsaturated carboxylic acid salt include salts of acrylic acid, methacrylic acid, crotonic acid, maleic acid, fumaric acid, itaconic acid, and the like. Of these, from the viewpoint of the dispersibility etc. of the ethylene-based resin aqueous dispersion, salts of acrylic acid and methacrylic acid are preferably used.

Examples of the base include ammonia, organic amines, alkali metal hydroxides, and the like.

Examples of organic amines include methylamine, ethylamine, diethylamine, triethylamine, diethanolamine, triethanolamine, and the like. Examples of alkali metal hydroxides include sodium hydroxide, potassium hydroxide, lithium hydroxide, and the like. Ammonia can be used in the form of ammonia gas or an ammonia aqueous solution. These bases can be used alone, or in a combination of two or more.

The copolymer may contain only one kind of α,β-unsaturated carboxylic acid salt, or two or more different kinds of α,β-unsaturated carboxylic acid salts.

As long as the effect of the present invention is not impaired, the copolymer can contain recurring units other than the ethylene unit and α,β-unsaturated carboxylic acid salt unit. For example, the copolymer can contain a non-salt α,β-unsaturated carboxylic acid unit. Examples of the α,β-unsaturated carboxylic acid include those defined in the examples of the α,β-unsaturated carboxylic acid salt, except that the α,β-unsaturated carboxylic acid is not a salt.

The copolymer preferably has a degree of neutralization of 35 to 100%. In this case, the copolymer is likely to be dispersed in the aqueous medium, and tends to be an ethylene-based resin aqueous dispersion having excellent dispersibility. The degree of neutralization of the copolymer is more preferably 40 to 70%.

The degree of neutralization herein means the content ratio (mol%) of the neutralized recurring unit to the total number of recurring units that form an acid component in the copolymer. For example, when the copolymer is a polymer compound formed of three types of constituent units, i.e., an ethylene unit, an α,β-unsaturated carboxylic acid salt unit, and an α,β-unsaturated carboxylic acid unit, the degree of neutralization of the copolymer means the ratio (mol%) of α,β-unsaturated carboxylic acid salt to the total number of moles of α,β-unsaturated carboxylic acid salt unit and α,β-unsaturated carboxylic acid unit.

In the copolymer, the ratio of the ethylene unit and α,β-unsaturated carboxylic acid salt unit is not particularly limited, as long as the effect of the present invention is not impaired. Because the non-polar properties derived from the ethylene unit and the polar properties derived from the α,β-unsaturated carboxylic acid salt are likely to be effectively exhibited, the total weight of the α,β-unsaturated carboxylic acid salt unit and α,β-unsaturated carboxylic acid unit (the α,β-unsaturated carboxylic acid unit is not present when the degree of neutralization is 100) is preferably 8 to 24 wt% relative to the total weight of the ethylene unit, α,β-unsaturated carboxylic acid salt unit, and α,β-unsaturated carboxylic acid unit (the α, β-unsaturated carboxylic acid unit is not present when the degree of neutralization is 100). In this case, the copolymer has excellent dispersibility in the aqueous medium, and a film formed of the ethylene-based resin aqueous dispersion has excellent blocking resistance. The total weight of the α,β-unsaturated carboxylic acid salt unit and α,β-unsaturated carboxylic acid unit (the α,β-unsaturated carboxylic acid unit is not present when the degree of neutralization is 100) is preferably 15 to 23 wt% relative to the total weight of the ethylene unit, α,β-unsaturated carboxylic acid salt unit, and α,β-unsaturated carboxylic acid unit (the α,β-unsaturated carboxylic acid unit is not present when the degree of neutralization is 100).

The copolymer may be any of a random copolymer, block copolymer, alternating copolymer, or graft copolymer, as long as the copolymer contains an ethylene unit and an α,β-unsaturated carboxylic acid salt unit. The copolymer may be composed only of an ethylene unit and an α,β-unsaturated carboxylic acid salt unit; or composed only of an ethylene unit, an α,β-unsaturated carboxylic acid salt unit, and an α,β-unsaturated carboxylic acid unit.

The mean particle size of the copolymer in the dispersion can be set to 5 to 2000 nm. In this range, the viscosity of the ethylene-based resin aqueous dispersion is not easily increased, and the dispersion stability is easily improved. The mean particle size of the copolymer is more preferably 10 to 300 nm. The mean particle size in the present invention indicates the value obtained by measuring the aqueous dispersion in which the concentration of the copolymer is adjusted to 0.1 wt% using a dynamic laser light scatterometer (trade name, Beckman Coulter, Multisizer 4).

The method for producing the copolymer is not particularly limited, and known production methods can be widely applied. The copolymers can also be obtained from commercially available products.

The copolymer can be produced, for example, by subjecting a polymerizable monomer to a polymerization reaction, such as radical polymerization. Specifically, a copolymer containing an ethylene unit and an α,β-unsaturated carboxylic acid salt unit can be obtained by performing a neutralization treatment after polymerization using a mixture containing ethylene and α,β-unsaturated carboxylic acid. Examples of this method include a method of dispersing in an aqueous medium a copolymer produced by radical polymerization etc. under stirring at 70 to 100°C in the presence of a base in a predetermined amount. In this case, stirring can be performed, for example, for 2 to 8 hours. Thereafter, the aqueous medium is cooled to room temperature while continuing stirring, thereby obtaining a copolymer that is neutralized with a base and that has a predetermined degree of neutralization, in the form of an aqueous dispersion.

Since the copolymer contains an α,β-unsaturated carboxylic acid salt unit, the hydrophilicity of the copolymer is increased. The copolymer contains an ethylene unit and an α,β-unsaturated carboxylic acid salt unit. In particular, the carboxylic acid salt moiety can play a hydrophilic role. This facilitates the production of the ethylene-based resin aqueous dispersion.

The kind of the fatty acid salt is not particularly limited as long as the effect of the present invention is not impaired, and known fatty acid salts can be widely used. The fatty acid salt is a component capable of adjusting the airtightness and adhesiveness of a film obtained from the ethylene-based resin aqueous dispersion.

Examples of the fatty acid salt include fatty acids selected from the group consisting of saturated fatty acid salts and unsaturated fatty acid salts.

Specific examples of the saturated fatty acid salt include pentadecylate, palmitate, margarate, stearate, arachidate, behenate, and lignocerate. Specific examples of the unsaturated fatty acid salt include palmitoleate, oleate, erucate, vacsenate, linoleate, linolenate, ricinoleate, and rosinate. These fatty acid salts can be used alone, or in a combination of two or more.

Examples of the salt of the fatty acid salt include alkali metals, such as potassium and sodium; alkaline earth metals, such as magnesium and calcium; ammonia; organic amines; and the like.

The fatty acid salt is particularly preferably at least one member selected from the group consisting of potassium oleate, potassium stearate, sodium oleate, and potassium rosinate.

The fatty acid salt may be produced by a known production method, or a commercially available product may be used.

In the ethylene-based resin aqueous dispersion, the content ratio of the copolymer and the fatty acid salt is not particularly limited, as long as the effect of the present invention is not impaired. For example, the fatty acid salt can be contained in an amount of 1 to 30 parts by mass per 100 parts by mass of the copolymer. When the fatty acid salt is contained in an amount of 1 part by mass or more per 100 parts by mass of the copolymer, the film formed of the ethylene-based resin aqueous dispersion attains more excellent airtightness. Further, when the fatty acid salt is contained in an amount of 30 parts by mass or less per 100 parts by mass of the copolymer, the film formed of the ethylene-based resin aqueous dispersion attains more excellent adhesiveness.

In the ethylene-based resin aqueous dispersion, the lower limit of the content of the fatty acid salt is more preferably 2 parts by mass, even more preferably 2.7 parts by mass, and particularly preferably 4.5 parts by mass, per 100 parts by mass of the copolymer. In the ethylene-based resin aqueous dispersion, the upper limit of the content of the fatty acid salt is more preferably 15 parts by mass, even more preferably 13 parts by mass, and particularly preferably 10 parts by mass, per 100 parts by mass of the copolymer.

The ethylene-based resin aqueous dispersion may contain other additive components, as long as the effect of the present invention is not impaired. Examples of the additive component include acryl-based thickening agents, such as polyacrylates and acrylic esters; and thickening agents formed of water-soluble resins, such as carboxymethyl cellulose, hydroxyethyl cellulose, and xanthan gum. By the water-soluble resin, the viscosity of the ethylene-based resin aqueous dispersion is adjusted to a more appropriate range, thereby further improving the dispersion stability.

When the ethylene-based resin aqueous dispersion contains a thickening agent, the thickening agent is preferably contained in an amount of 0.1 to 1 part by mass per 100 parts by mass of the copolymer.

In addition, examples of the additive component include antifoaming agents, antifungal agents, antioxidants, and agents for improving slipping properties, such as fatty acid amides, waxes, and silicone oils.

a In the ethylene-based resin aqueous dispersion, the concentration (solids concentration) of the copolymer can be adjusted to a range of 5 to 50 mass%. In this case, the amount of the aqueous medium is not overly increased, and the viscosity is in an appropriate range. In the ethylene-based resin aqueous dispersion, the concentration of the copolymer is more preferably 8 to 48 mass%, even more preferably 10 to 40 mass%, even more preferably 15 to 35 mass%, and particularly preferably 24 to 30 mass%.

The preparation method of the ethylene-based resin aqueous dispersion of the present invention is not particularly limited, and a wide variety of known preparation methods can be used. For example, the ethylene-based resin aqueous dispersion of the present invention can be prepared by mixing a copolymer, a fatty acid salt, and an additive component, which is added as required to attain a predetermined content ratio.

Specific examples of the production method of the ethylene-based resin aqueous dispersion according to the present invention include a method in which the copolymer is dispersed in an aqueous medium according to the above-described neutralization treatment method to prepare a copolymer aqueous dispersion, and the copolymer aqueous dispersion is mixed with a predetermined amount of fatty acid salt; and a method in which a fatty acid salt is mixed during the neutralization treatment to prepare a copolymer aqueous dispersion. Other additive components may be mixed with the copolymer aqueous dispersion together with the fatty acid salt, or other additive components may be added in advance to the copolymer aqueous dispersion before mixing with the fatty acid salt. When the fatty acid salt is mixed with the copolymer aqueous dispersion, a solid fatty acid salt may be used, or a fatty acid salt dispersed in an aqueous medium may be used.

The mixing method is not particularly limited, and examples include a method using a known stirrer; and a method using a known mixer or disperser, such as a ball mill, a kneader, or a disper.

The ethylene-based resin aqueous dispersion of the present invention can have, for example, a contact angle against a polyethylene nonwoven fabric of 75 to 90°. When the contact angle against the polyethylene nonwoven fabric is within this range, the ethylene-based resin aqueous dispersion can easily form a uniform film on a substrate, such as a fiber substrate, and the formed film has more excellent airtightness. The contact angle against the polyethylene nonwoven fabric herein refers to a value obtained by bringing the ethylene-based resin aqueous dispersion having a solids concentration of 20 mass% into contact with a nonwoven fabric (e.g., a basis weight of 64 g/m²) so that the droplet diameter is 0.2 mm, and measuring the contact angle using a contact angle meter 30 seconds after contact.

A film can be formed by using the ethylene-based resin aqueous dispersion of the present invention. This film comprises at least a copolymer containing an ethylene unit and an α,β-unsaturated carboxylic acid salt unit, and a fatty acid salt.

The method for producing a film using the ethylene-based resin aqueous dispersion of the present invention is not particularly limited. Examples include a production method comprising the step of applying the ethylene-based resin aqueous dispersion of the present invention to a substrate, followed by drying, thereby forming a film on the substrate. Thus, the film obtained from the ethylene-based resin aqueous dispersion can be formed.

As the substrate, known substrates used for film formation can be widely used. In particular, since the film has excellent airtightness and adhesiveness, a fiber substrate, such as a nonwoven fabric, is preferably used. In addition, examples of the substrate include a glass substrate, metal substrate, resin substrate, resin film, fibrous sheet, and the like.

The ethylene-based resin aqueous dispersion can be applied using various known coating means. Examples include a hand coater, blade coater, bar coater, screen printing, dip coater, and the like.

After the application of the ethylene-based resin aqueous dispersion, drying can be performed using a suitable method. The drying method is not particularly limited. For example, natural drying; warm-air drying; heat-drying using a heater, such as an oven; or the like can be used. Drying conditions, such as drying temperature and drying time, are not particularly limited, and known drying conditions can be widely used.

The film is formed of the ethylene-based resin aqueous dispersion containing the copolymer and the fatty acid salt. Therefore, when the film is formed on a substrate, such as a fiber substrate, excellent airtightness and adhesiveness can be imparted to the fiber substrate.

The film obtained from the ethylene-based resin aqueous dispersion of the present invention ensures excellent airtightness and adhesiveness. Moreover, even when the film is formed of a small amount of the ethylene-based resin aqueous dispersion, excellent airtightness and adhesiveness can be imparted to the substrate. Accordingly, the ethylene-based resin aqueous dispersion of the present invention is cost-effective.

Thus, the ethylene-based resin aqueous dispersion of the present invention can be suitably used as, for example, a coating agent and an adhesive for steel plates and aluminum plates. The ethylene-based resin aqueous dispersion of the present invention can also be suitably used as an aqueous-based heat-sealing material for paper, aluminum foil, or plastic films, such as polypropylene, polyethylene, and polyester; a fiber treatment agent; and various binders.

The ethylene-based resin aqueous dispersion of the present invention is suitable as a raw material for producing an aqueous-based heat-sealing material. The aqueous-based heat-sealing material produced by using the ethylene-based resin aqueous dispersion can provide excellent airtightness and adhesiveness to a substrate, such as a fiber substrate. As long as the effect is not impaired, the aqueous-based heat-sealing material may contain additives other than the ethylene-based resin aqueous dispersion; or may contain the ethylene-based resin aqueous dispersion alone.

### Examples

Hereinafter, the present invention will be described in more detail below with reference to Examples. However, the present invention is not limited to these Examples.

### Evaluation Methods

### (1) Contact angle of ethylene-based resin aqueous dispersion against polyethylene nonwoven fabric

An ethylene-based resin aqueous dispersion prepared to have a solids concentration of 20 mass% using pure water was brought into contact with a polyethylene nonwoven fabric having a basis weight of 64 g/m², and the contact angle was measured using a "CA-S150" (produced by Kyowa Interface Science Co., Ltd.) contact angle meter. The droplet diameter of the ethylene-based resin aqueous dispersion was set to 0.2 mm, and the time between the contact and the measurement of the contact angle was 30 seconds.

### (2) Airtightness

An ethylene-based resin aqueous dispersion was applied to a polyethylene nonwoven fabric having a basis weight of 64 g/m², using a coating machine (trade name; K Hand Coater No.1, produced by Matsuo Sangyo Co., Ltd.), so that the application amount after drying was 2 g/m². The polyethylene nonwoven fabric after application was heat-dried for 1 minute using a blow dryer at 60°C to form a film. The obtained film was subjected to the Gurley test method and air permeability test (in accordance with JIS P8117) to evaluate airtightness. An air permeability of 100 seconds/100 mL or more is deemed as having particularly high airtightness; an air permeability of 70 seconds/100 mL or more and less than 100 seconds/100 mL is deemed as having high airtightness; and an air permeability of less than 70 seconds/100 mL is deemed as having poor airtightness.

### (3) Adhesiveness

An ethylene-based resin aqueous dispersion was applied to a polyethylene nonwoven fabric having a basis weight of 64 g/m², using a coating machine (trade name; K Hand Coater No. 1, produced by Matsuo Sangyo Co., Ltd.), so that the application amount after drying was 2 g/m². The polyethylene nonwoven fabric after application was heat-dried for 5 minutes using a blow dryer at 60°C to form a film.

Subsequently, using the polyethylene film as a material to be adhered, the material to be adhered was adhered to the obtained film using a heat-sealing tester (trade name; TP-701 type, produced by Tester Sangyo Co., Ltd.). The heat-sealing conditions were a sealing temperature of 140°C, a sealing pressure of 2 kg/cm², and a sealing time of 0.5 seconds. The heat-sealing substrate obtained by using the heat-sealing tester was cut out to a width of 25 mm, and used as a test piece. After cooling the test piece, T-type peeling was performed with a tensile tester (trade name; Autograph AGS-J, produced by Shimadzu Corporation) at a tensile speed of 50 mm/min. Thereby, the peel strength of the film was measured to evaluate the adhesiveness. A peel strength of 1.7 N/25 mm or more indicates that the film has high adhesiveness as a packaging material, and a peel strength of 1.8 N/25 mm or more indicates that the film has particularly high adhesiveness as a packaging material.

### Production Example 1

71.5 g of an ethylene/acrylic acid copolymer (acrylic acid content: 20 wt%), 5.4 g of 28% ammonia water (equivalent to 45% neutralization), and 173.1 g of water as an aqueous dispersion medium were placed in a 500-ml separable flask equipped with a stirring blade having a diameter of 50 mm. The mixture was heated under stirring, and the temperature was raised. After the contents were heated to 95°C, stirring was continued at this temperature for 4 hours. Thereafter, the contents were cooled to room temperature (around 25°C) while stirring was continued, thus obtaining an aqueous dispersion of an ethylene/acrylic acid copolymer neutralized with a base (i.e., a copolymer containing an ethylene unit and an α,β-unsaturated carboxylic acid salt unit).

### Production Example 2

71.5 g of an ethylene/methacrylic acid copolymer (methacrylic acid content: 20 wt%), 4.1 g of potassium hydroxide (equivalent to 45% neutralization), and 174.4 g of water as an aqueous dispersion medium were placed in a 500-ml separable flask equipped with a stirring blade having a diameter of 50 mm. The mixture was heated under stirring, and the temperature was raised. After the contents were heated to 95°C, stirring was continued at this temperature for 4 hours. Thereafter, the contents were cooled to room temperature (around 25°C) while stirring was continued, thus obtaining an aqueous dispersion of a neutralized ethylene/methacrylic acid copolymer (i.e., a copolymer containing an ethylene unit and an α,β-unsaturated carboxylic acid salt unit).

### Example 1

A potassium oleate aqueous dispersion (trade name; Nonsoul OK-1, solids concentration: 18 mass%, produced by NOF Corporation) was weighed so that the pure content (potassium oleate) was 0.7 g. The potassium oleate aqueous dispersion and 50 g of the aqueous dispersion (solids concentration: 29 mass%) obtained in Production Example 1 were mixed and dispersed. Thereby, an ethylene-based resin aqueous dispersion was obtained.

### Example 2

The operation was performed in the same manner as in Example 1 except that the potassium oleate aqueous dispersion (trade name; Nonsoul OK-1, solids concentration: 18 mass%, produced by NOF Corporation) was weighed so that the pure content (potassium oleate) was 1.4 g, thereby obtaining an ethylene-based resin aqueous dispersion.

### Example 3

The operation was performed in the same manner as in Example 1 except that the potassium oleate aqueous dispersion (trade name; Nonsoul OK-1, solids concentration: 18 mass%, produced by NOF Corporation) was weighed so that the pure content (potassium oleate) was 0.4 g, thereby obtaining an ethylene-based resin aqueous dispersion.

### Example 4

The operation was performed in the same manner as in Example 1 except that the potassium stearate aqueous dispersion trade name; Nonsoul SK-1, produced by NOF Corporation) was weighed in place of the potassium oleate aqueous dispersion so that the pure content (potassium stearate) was 0.7 g, thereby obtaining an ethylene-based resin aqueous dispersion.

### Example 5

The operation was performed in the same manner as in Example 1 except that the sodium oleate aqueous dispersion (trade name; Nonsoul ON-A, produced by NOF Corporation) was weighed in place of the potassium oleate aqueous dispersion so that the pure content (sodium oleate) was 0.7 g, thereby obtaining an ethylene-based resin aqueous dispersion.

### Example 6

The operation was performed in the same manner as in Example 1 except that that the potassium rosinate aqueous dispersion (trade name; Rondis K25, produced by Arakawa Chemical Industry Co., Ltd.) was weighed in place of the potassium oleate aqueous dispersion so that the pure content (potassium rosinate) was 0.7 g, thereby obtaining an ethylene-based resin aqueous dispersion.

### Example 7

The operation was performed in the same manner as in Example 1 except that the aqueous dispersion obtained in Production Example 2 was used in place of the aqueous dispersion obtained in Production Example 1, thereby obtaining an ethylene-based resin aqueous dispersion.

### Example 8

Xanthan gum (trade name; Echo Gum, DSP Gokyo Food & Chemical Co., Ltd.) was added to the aqueous dispersion obtained in Example 1 so that the pure content was 0.1 g, thereby obtaining an ethylene-based resin aqueous dispersion.

### Comparative Example 1

The aqueous dispersion obtained in Production Example 1 was used as is as an ethylene-based resin aqueous dispersion.

### Comparative Example 2

The operation was performed in the same manner as in Example 1 except that a polyvinyl alcohol (trade name; PVA110, produced by Kuraray Co., Ltd.) aqueous solution, which was a nonionic surfactant, was weighed in place of the potassium oleate aqueous dispersion, so that the pure content (polyvinyl alcohol) was 0.7 g. An ethylene-based resin aqueous dispersion was thus obtained.

### Comparative Example 3

The operation was performed in the same manner as in Example 1 except that an acetylene glycol (trade name; Surfynol 420, produced by Nissin Chemical Industry Co., Ltd.) aqueous solution, which was a wetting agent, was weighed in place of the potassium oleate aqueous dispersion, so that the pure content (acetylene glycol) was 0.7 g. An ethylene-based resin aqueous dispersion was thus obtained.

### Comparative Example 4

The operation was performed in the same manner as in Example 1, except that 1.4 g of isopropyl alcohol was weighed in place of the potassium oleate aqueous dispersion. An ethylene-based resin aqueous dispersion was thus obtained.

**Table 1**

| Example/ Comparative Example | Contact angle (°) | Evaluation of airtightness | Evaluation of adhesiveness |
|---|---|---|---|
| | | Air permeability (sec/100 mL) | Peeling strength (N/25 mm) |
| Example 1 | 82 | 151 | 1.9 |
| Example 2 | 80 | 200 | 1.7 |
| Example 3 | 89 | 85 | 2.0 |
| Example 4 | 87 | 84 | 1.8 |
| Example 5 | 82 | 141 | 2.1 |
| Example 6 | 81 | 160 | 1.8 |
| Example 7 | 81 | 150 | 2.0 |
| Example 8 | 80 | 160 | 1.9 |
| Comparative Example 1 | 119 | 44 | 2.0 |
| Comparative Example 2 | 103 | 50 | 1.9 |
| Comparative Example 3 | 71 | 69 | 2.1 |
| Comparative Example 4 | 103 | 65 | 2.1 |

Table 1 shows the results of the contact angle and the evaluation of airtightness and adhesiveness of the ethylene-based resin aqueous dispersions obtained in the Examples and Comparative Examples.

Table 1 indicates that the films formed of the ethylene-based resin aqueous dispersions obtained in the Examples have excellent airtightness and adhesive strength on the nonwoven fabric. In contrast, it is found that the molded products formed of the ethylene-based resin aqueous dispersions obtained in Comparative Examples have low airtightness on the nonwoven fabric.

## Claims

1. An ethylene-based resin aqueous dispersion comprising: a copolymer containing an ethylene unit and an α,β-unsaturated carboxylic acid salt unit, a fatty acid salt, and an aqueous medium, wherein the copolymer and the fatty acid salt are dispersed in the aqueous medium.

2. The ethylene-based resin aqueous dispersion according to claim 1, wherein the α,β-unsaturated carboxylic acid salt in the copolymer is a salt of acrylic acid or a salt of methacrylic acid.

3. The ethylene-based resin aqueous dispersion according to claim 1 or 2, wherein the contact angle against a polyethylene nonwoven fabric is 75 to 90°.

4. The ethylene-based resin aqueous dispersion according to any one of claims 1 to 3, wherein the fatty acid salt is contained in an amount of 1 to 30 parts by mass per 100 parts by mass of the copolymer.

5. An aqueous-based heat-sealing material comprising the ethylene-based resin aqueous dispersion according to any one of claims 1 to 4.
